(19) Europäisches Patentamt
European Patent Office
Office européen des brevets

(11) EP 0 716 125 B1

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(21) Anmeldenummer: **95118358.1**

(22) Anmeldetag: **22.11.1995**

(51) Int Cl.[7]: **C08L 69/00**, C08K 5/523
// (C08L69/00, 51:04, 83:00, 71:12),
(C08L69/00, 51:04, 25:02, 71:12, 83:00),
(C08L69/00, 51:04, 33:04, 71:12, 83:00),
(C08L69/00, 51:04, 67:02, 71:12, 83:00)

(54) **Flammgeschützte, thermoplastische Polycarbonatformmassen**

Flame retardant thermoplastic polycarbonate moulding compositions

Masses à mouler thermoplastiques ignifugées à base de polycarbonate

(84) Benannte Vertragsstaaten:
**DE ES FR GB IT NL**

(30) Priorität: **05.12.1994 DE 4443164**

(43) Veröffentlichungstag der Anmeldung:
**12.06.1996 Patentblatt 1996/24**

(73) Patentinhaber: **BAYER AG**
**51368 Leverkusen (DE)**

(72) Erfinder:
- **Eckel, Thomas, Dr.**
  **D-41540 Dormagen (DE)**
- **Fuhr, Karl, Dr.**
  **D-47803 Krefeld (DE)**
- **Wittmann, Dieter, Dr.**
  **D-51375 Leverkusen (DE)**
- **Alberts, Heinrich, Dr.**
  **D-51519 Odenthal (DE)**

(56) Entgegenhaltungen:
**EP-A- 0 171 826** **EP-A- 0 522 653**
**EP-A- 0 594 021** **DE-A- 4 040 243**
**DE-A- 4 200 247**

- **DATABASE WPI Week 9431 Derwent Publications Ltd., London, GB; AN 94-252945 XP002002657 & JP-A-06 184 357 (ASAHI KASEI KOGYO KK) , 5.Juli 1994**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft halogenfrei flammgeschützte, thermoplastische Formmassen aus Polycarbonat und Pfropfpolymerisat, die gegebenenfalls thermoplastisches Copolymerisat und/oder Polyalkylenterephthalat enthalten können. Als Flammschutzmittel wird neben einer speziellen Phosphor-Verbindung eine synergistisch wirkende Kombination aus Silikonharz und Polyphenylenoxid eingesetzt.

In US-P 5 061 745 und US-P 5 030 675 werden flammwidrige, thermoplastische Formmassen aus aromatischem Polycarbonat, ABS-Polymerisat, Copolymerisat bzw. Polyalkylenterephthalat sowie Monophosphaten und fluorierten Polyolefinen als Flammschutzmittel bzw. als Antidrippingmittel beschrieben. Als, Nachteil der fluorierten Polyolefine ist ihr Halogengehalt und der damit im Brandfall austretende Fluorwasserstoff zu nennen. Die Mitverwendung von speziell Polytetrafluorethylen ermöglichte bislang aber allein selbstverlöschende Formmassen aus aromatischen Polycarbonaten, gegebenenfalls thermoplastischen Copolymerisaten und thermoplastischen Polyalkylenterephthalaten sowie Pfropfpolymerisaten mit der Bewertung V-O bei 1,6 mm dicken Prüfkörpern nach UL-94.

In EP-A 0 363 608 werden Polymermischungen aus aromatischem Polycarbonat, Co- und Pfropfpolymerisaten sowie oligomeren Phosphaten auf Basis von z.B. Hydrochinon und Resorcin als Flammschutzadditive beschrieben. Der effektive Flammschutz von V-O/1,6 mm nach UL-94 wird nur in Gegenwart von Polytetrafluorethylen bewirkt.

In den US-Patentschriften 4 273 691, 4 387 176, 4 536 529, 4 871 795 und 5 242 744 werden Thermoplaste mit einem Flammschutzsystem aus Silikonöl bzw. aus einer Mischung aus einem Silikonöl und einem Silikonharz sowie einer Metallseife (Mg-Stearat) und gegebenenfalls Magnesiumhydroxid beansprucht. Als weitere zusätzliche Flammschutzadditive werden halogenhaltige Flammschutzmittel (Dekabromdiphenylether), auch mit Antimontrioxid, und Ammoniumpolyphosphat mit mehrwertigen Alkoholen aufgeführt. Als Thermoplaste stehen Polypropylen und andere Polymerisate im Vordergrund, Polycarbonat und z.B. Polyester werden teils allgemein erwähnt. Hier muß darauf hingewiesen werden, daß Polycarbonat durch die Mitverwendung von Magnesiumverbindungen eine deutliche Einbuße seiner guten mechanischen Eigenschaften erleidet, V-O/3,2 mm nur bei Mitverwendung von Halogen erreichbar ist (s. US-P 4 387 176, Spalte 2, Zeilen 12 bis 20) und Phosphorsäureester nicht mitverwendet werden.

Die EP-A 0 520 186 beansprucht flammgeschützte Formmassen aus Polycarbonat, auch in Mischung mit ABS-Komponenten, die als Flammschutzmittel eine Phosphorverbindung, eine Borverbindung, ein Polyorganosiloxan und/oder ein fluorhaltiges Harz enthalten. Aus den Beispielen und Vergleichsbeispielen geht hervor, daß der angestrebte Flammschutz von V-O/1,6 mm nur bei Mitverwendung von Triphenylphosphat, Zinkborat und Polydimethylsiloxan und/oder Polytetrafluorethylen erreicht werden kann, ohne Zinkborat und Triphenylphosphat jedoch mit Polydimethylsiloxan wird V-O/1,6 mm verfehlt (s. EP-A 0 520 186, Vergleichsbeispiel 4), mit Polytetrafluorethylen statt Polyorganosiloxan wird nur V-1/1,6 mm erzielt (s. EP-A 0 520 186, Vergleichsbeispiel 5).

Die DE-OS 4 301 730 beschreibt nahezu analog zur EP-A 520 186 den effektiven Flammschutz von Polycarbonat-Formmassen, statt einer Borverbindung (Zinkborat) werden Zinksalze von Carbonsäuren (z.B. Zinkacetat) mitverwendet. Fehlt diese Komponente, so wird mit Triphenylphosphat und Dimethylsiloxan V-O/1,6 mm ebenfalls nicht erreicht (s. DE-OS 4 301 730, Vergleichsbeispiele 6 - 8).

In US-P 5 100 958 wird die Herstellung von Cofällungen aus Silikonharzen und Pfropfpolymerisaten vom ABS-Typ sowie die Mischung dieser Cofällung mit Polycarbonat und Styrol/Acrylnitril-Copolymerisat beansprucht. Für einen effektiven Flammschutz von V-O/1,6 mm ist als zusätzliches Flammschutzmittel Triphenylphosphat mitzuverwenden, außerdem muß das Polycarbonat 10 Gew.-% Tetrabrombisphenol-A enthalten (s. US-P 5 100 958, Tabelle I, Spalte 7, Zeile 23). Halogenfreier Flammschutz ist mit den Formmassen von US-P 5 100 958 nicht erreichbar.

Aus DE-OS 4 200 247 sind thermoplastische Formmassen u.a. aus aromatischen Polycarbonaten, Polyphenylenethern, Pfropfpolymensaten, Styrolcopolymerisaten sowie 0 bis 20 Gew.-% organischer Phosphate und 0 bis 2 Gew.-% Tetrafluorethylenpolymerisate bekannt. Der Erfindung lag die Aufgabe zugrunde, thermoplastische Polycarbonatformmassen mit einem insgesamt guten Eigenschaftsprofil, besonders mit einer erhöhten Wärmeformbeständigkeit, zur Verfügung zu stellen. Dieses wird in DE-OS 4 200 247 an den Beispielen 1 und 2, bezogen auf Vergleichsbeispiele, gezeigt. Aus Beispiel 2 geht hervor, daß der Flammschutz von V-O nach UL-94 aus den Komponenten Polyphenylenoxid, Triphenylphosphat und Polytetrafluorethylen besteht. Die Verwendung von Polyphenylenethern mit Phosphaten allein ohne Mitverwendung von Polytetrafluorethylen zur Erzielung eines Flammschutzes von V-O/1,6 mm nach UL-94 wird nicht beschrieben.

In EP-A 522 653 werden ABS-Pfropfkautschuke mit Polyphenylenethern bzw. Novolaken und u.a. Bis-Phosphaten als Flammschutzmittel beschrieben. Auch können typische Copolymerisate oder Polycarbonat mitverwendet werden. Der Flammschutz der jeweiligen Mischung wird in Form des Sauerstoffindexes (LOI-Wert nach ASTM) angegeben. In EP-A 522 653, Beispiel 3, Tabelle 3, mit ABS und Polycarbonat (jeweils 40 Gew.-%) werden zum Flammschutz je 10 Gew.-% Polyphenylenether und Hydrochinon-bis-(diphenylphosphat) eingesetzt, der LOI-Wert beträgt 23,5 (relativ niedriger Wert, ohne Beschreibung des Tropfverhaltens). Bei Kenntnis der EP-A-522 653 war nicht anzunehmen, daß durch Austausch des Hydrochinons gegen das Resorcin-bis-(diphenylphosphat) und unter weiterer Mitverwendung von leicht brennbaren typischen Copolymeren ein nichttropfendes V-O/1,6 mm, also ein deutlich höherer Flammschutz ohne Tropfen (halogenfrei, ohne Mitverwendung von Polytetrafluorethylen), zu erzielen sei.

In US-P 5 204 395 werden Polyphenylenoxid-Formmassen beschrieben, die Füllstoffe enthalten, die mit Silikon-Öl behandelt worden sind. Die Kombination aus speziellem Füllstoff und Silikon führt zu einer Verringerung der Nachbrennzeiten. Phosphorverbindungen als Flammschutzmittel werden nicht erwähnt.

Gemäß EP-A 0 171 826 führt die Zugabe von geringen Anteilen von Polyhydrogensiloxanen zu Polycarbonat-Polyphenylenether-Mischungen zu einer deutlich besseren Schmelzstabilität.

Es wurde gefunden, daß bei Verwendung einer Kombination von 0,5 bis 5 Gew.-% Silikonharz und 2 bis 15 Gew.-% Polyphenylenoxid in Verbindung mit 3 bis 18 Gew.-% Phosphorverbindung gemäß der unten beschriebenen Komponente E) in Formmassen aus thermoplastischen aromatischen Polycarbonaten, gegebenenfalls thermoplastischen Copolymerisaten und thermoplastischen Polyalkylenterephthalaten sowie Pfropfpolymerisaten ein Selbstverlöschen ohne brennendes Abtropfen nach UL-94 mit der Bewertung V-O bis V-1 bei 1,6 mm dicken Prüfkörpern erzielt wird. Das bisher als Antidrippingmittel eingesetzte Polytetrafluorethylen wird nicht benötigt. Die erfindungsgemäßen Formmassen ermöglichen damit im Brandfall vollkommen halogenfreie, hochwirksame, selbstverlöschende Formmassen. Die synergistische Wirkung der erfindungsgemäßen Kombination aus Silikonharz und Polyphenylenoxid führt zu einer deutlichen Reduktion der benötigten Mengen an Flammschutzmitteln. Die erfindungsgemäßen Formmassen besitzen deutliche Eigenschaftsvorteile in den Bereichen Kerbschlagzähigkeit, Spannungsrißbeständigkeit und Wärmeformbeständigkeit.

Gegenstand der vorliegenden Erfindung sind halogenfrei flammgeschützte, im Brandfall nicht brennend abtropfende thermoplastische Polycarbonat-Formmassen, bestehend aus

A) 50 bis 95 Gew.-%, vorzugsweise 60 bis 90 Gew.-%, thermoplastischem aromatischem Polycarbonat,

B) 0 bis 20 Gew.-%, vorzugsweise 1 bis 15 Gew.-%, Copolymerisat bzw. Polykondensat bestehend aus

B.1) thermoplastischen Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus und

B.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-%, vorzugsweise 5 bis 15 Gew.-%, Pfropfpolymerisat, hergestellt aus

C.1) 5 bis 90 Gew.-%, vorzugsweise 30 bis 80 Gew.-%, einer Mischung aus

C.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-%, vorzugsweise 20 bis 70 Gew.-%, Kautschuk mit einer Glastemperatur $TG \leq 10$ °C,

D) 1 bis 20 Gew.-%, vorzugsweise 2 bis 15 Gew.-%, einer als Flammschutzmittel wirkenden Kombination aus

D.1) 5 bis 50 Gew.-%, vorzugsweise 5 bis 25 Gew.-% Silikonharz und

D.2) 50 bis 95 Gew.-%, vorzugsweise 75 bis 95 Gew.-% thermoplastischen Polyphenylenether,

E) 3 bis 18 Gew.-%, vorzugsweise 5 bis 15 Gew.-%, Phosphorsäureester aus

E.1) Phosphorverbindungen der Formel (I),

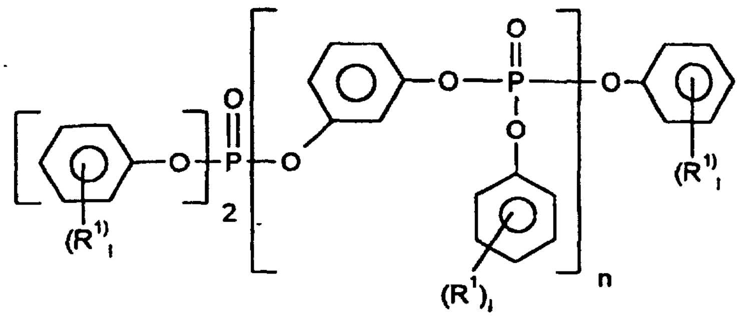

(I)

worin

n die Zahlen 1 bis 5,

$R^1$ Methyl und

l die Zahlen 0 bis 5, vorzugsweise 0 und 1 bis 3, sind,

oder

E.2) einer Mischung aus Phosphorverbindungen der Formel (I) und Phosphorverbindungen der Formel (II),

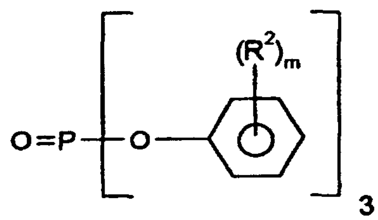

(II)

worin

$R^2$ Methyl und

m die Zahlen 0 oder 1 bis 5, vorzugsweise 0 und 1 bis 3, sind,

wobei die Menge an Phosphorverbindung gemäß Formel (II) in der Phosphatmischung aus E.1) und E.2) maximal 35 Gew.-%, vorzugsweise maximal 30 Gew.-%, beträgt.

Komponente A)

Die erfindungsgemäß geeigneten, thermoplastischen Polycarbonate gemäß Komponente A) können sowohl Homo- als auch Copolycarbonate aus den Diphenolen der Formel (III) sein,

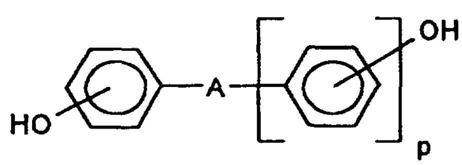

(III)

worin

p 1 oder Null ist und

A eine Einfachbildung, $C_1$-$C_5$-Alkylen, $C_2$-$C_5$-Alkyliden, $C_5$-$C_6$- gegebenenfalls durch Methylgruppen substituiertes Cycloalkyliden, -O-, -S- und -$SO_2$-sein können.

Die Polycarbonate gemäß Komponente A) können sowohl linear als auch verzweigt sein, sie können aromatisch gebundene Methylgruppen enthalten und sind halogenfrei. Die Polycarbonate der Komponente A) können sowohl einzeln als auch im Gemisch eingesetzt werden.

Die Diphenole der Formel (III) sind entweder literaturbekannt oder nach literaturbekannten Verfahren herstellbar. Die Herstellung der erfindungsgemäß geeigneten Polycarbonate gemäß Komponente A) ist ebenfalls literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Diphenole der Formel (III) sind z.B. Hydrochinon, Resorcin, 4,4'-Dihydroxydiphenyl, 2,2-Bis-(4-hydroxyphenyl)-propan (Bisphenol-A), 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl)-3,3,5-trimethylcyclohexan. Bevorzugte Diphenole der Formel (I) sind 2,2-Bis-(4-hydroxyphenyl)-propan und 1,1-Bis-(4-hydroxyphenyl)-cyclohexan. Es können auch Mischungen von Diphenolen eingesetzt werden, z.B. aus Bisphenol-A und bis zu 60 Mol-% 1,1-Bis-(4-hydroxyphenyl)-3,3,5-trimethylcyclohexan.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (IIIa) verwendet werden,

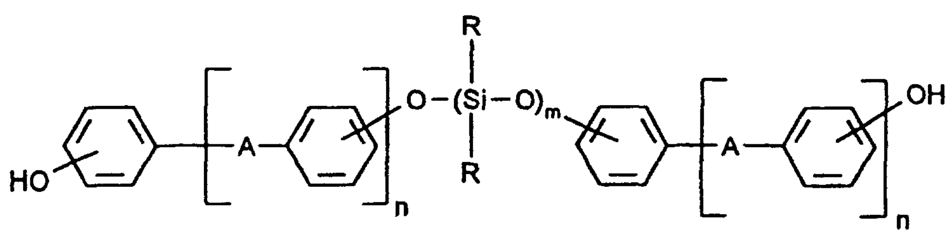

(IIIa)

worin

-A- die für Formel (III) genannte Bedeutung hat, n 1 oder null ist, die Rs gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist. Polydiorganosiloxane mit Hydroxy-aryloxy-Endgruppen gemäß Formel (IIIa) sind bekannt (s. beispielsweise US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Die Polycarbonate A) können teilweise oder vollständig durch aromatische Polyestercarbonate ersetzt sein.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß DE-OS 3 506 472, wie z.B. p-Nonylphenol, 2,6-di-tert-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (III).

Die erfindungsgemäß geeigneten Polycarbonate gemäß Komponente A) können in bekannter Weise verzweigt sein, und zwar vorzugsweise durch den Einbau von 0,05 bis 2 Mol-%, bezogen auf die Summe der eingesetzten Diphenole, an dreioder mehr als dreifunktionellen Verbindungen, z.B. solchen mit drei oder mehr als drei phenolischen OH-Gruppen.

Die erfindungsgemäß geeigneten Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Komponente B.1)

Erfindungsgemäß einsetzbare Vinyl-(Co)Polymerisate gemäß Komponente B.1) sind harzartig, thermoplastisch und kautschukfrei. Sie sind solche aus wenigstens einem Monomeren aus der Reihe Styrol, α-Methylstyrol, kernalkyl-substituiertem Styrol, $C_1$-$C_8$-Alkylacrylat, $C_1$-$C_8$-Alkylmethacrylat (Komponente B.1.1) mit wenigstens einem Monomeren aus der Reihe Acrylnitril, Methacrylnitril, $C_1$-$C_8$-Alkylmethacrylat, $C_1$-$C_8$-Alkylacrylat, Maleinsäureanhydrid, N-substituiertem Maleinimid und/oder Vinylacetat (Komponente B.1.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylester wird Methacrylsäuremethylester genannt.

Thermoplastische Copolymerisate mit einer Zusammensetzung gemäß Komponente B.1) können bei der Pfropfpolymerisation zur Herstellung der Komponente C) als Nebenprodukte entstehen, besonders dann, wenn große Mengen Monomere auf kleine Mengen Kautschuk gepfropft werden. Die erfindungsgemäß einzusetzende Menge an Copolymerisat B.1) bezieht diese Nebenprodukte der Pfropfpolymerisation nicht mit ein.

Die thermoplastischen Copolymerisate B.1) enthalten 50 bis 95 Gew.-%, vorzugsweise 60 bis 90 Gew.-% Komponente B.1.1) und 5 bis 50 Gew.-%, vorzugsweise 10 bis 40 Gew.-%, Komponente B.1.2).

Besonders bevorzugte Copolymerisate B.1) sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Copolymerisate gemäß Komponente B.1) sind bekannt und lassen sich durch radikalische Polymerisation, insbesondere durch Emulsions-, Suspensions-, Lösungsoder Massepolymerisation herstellen. Die Copolymerisate gemäß Komponente B.1) besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte erfindungsgemäße Copolymerisate B.1) sind auch statistisch aufgebaute Copolymerisate aus Styrol, Maleinsäureanhydrid und/oder N-substituiertem Maleinimid, die durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol/Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel $\overline{M}_n$) der erfindungsgemäß geeigneten statistisch aufgebauten Styrol/Maleinsäureanhydrid-Copolymeren gemäß Komponente B.1) können in weiten Bereichen variieren. Besonders bevorzugt ist der Bereich von 60 000 bis 200 000. Bevorzugt ist für diese Produkte eine Grenzviskosität von 0,3 bis 0,9 dl/g (gemessen in Dimethylformamid bei 25 °C).

Anstelle von Styrol können die Vinylcopolymerisate B.1) auch kernsubstituierte Styrole wie Vinyltoluole, 2,4-Dimethylstyrol und andere halogenfreie substituierte Styrole wie α-Methylstyrol enthalten.

**Komponente B.2)**

Die Polyalkylenterephthalate der Komponente B.2) sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäure mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2,-Bis-(4-hydroxycyclohexyl)-propan, 2,4-Dihydroxy-1,1,3,3-tetramethyl-cyclobutan, 2,2,-Bis(4-β-hydroxyethoxy-phenyl)-propan und 2,2-Bis(4-hydroxypropoxy-phenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 - 1,2 dl/g, gemessen in Phenol/o-Dichlorbenzol (1:1 Gew.-Tle.) bei 25 °C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Komponente C)

Die Pfropfpolymerisate C) werden durch radikalische Copolymerisation der Monomergemische C.1) aus C. 1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse- oder Suspensionspolymerisation. Besonders bevorzugte Pfropfpolymerisate C) sind die sogenannten ABS-Polymerisate.

Beispiele für Monomere C.1) sind nach C.1.1) Styrol, $\alpha$-Methylstyrol, p-Methylstyrol, Methylmethacrylat oder Mischungen daraus, Beispiele für Monomere nach C.1.2) sind Acrylnitril, Methacrylnitril, Methylmethacrylat, n-Butylacrylat, t-Butylacrylat, Maleinsäureanhydrid und N-Phenylmaleinimid oder Mischungen daraus. Bevorzugte Monomere nach C.1.1) sind Styrol, $\alpha$-Methylstyrol und Methylmethacrylat. Bevorzugte Monomere nach C.1.2) sind Acrylnitril, Maleinsäureanhydrid und Methylmethacrylat. Besonders bevorzugte Monomere sind Styrol und Acrylnitril.

Zur Herstellung der Pfropfpolymerisate gemäß Komponente C) geeignete Kautschuke C.2) sind insbesondere Polybutadiene, Polyisoprene, Styrol-Butadien-Copolymerkautschuke, Acrylnitril-Butadien-Copolymerkautschuke mit Gelgehalten (gemessen bei 20 °C) größer als 30 Gew.-%, Acrylatkautschuke, EPDM(Ethylen-Propylen-Dien-Monomer)-Kautschuke und Siliconkautschuke.

Bevorzugte Kautschuke C.2) sind Dienkautschuke (z.B. auf Basis Butadien, Isopren etc.) oder Gemische von Dienkautschuken oder Copolymerisate von Dienkautschuken oder deren Gemische mit weiteren copolymerisierbaren Monomeren, z.B. gemäß C.1.1) und C.1.2), mit der Maßgabe, daß die Glasübergangstemperatur der Komponente C. 2) unterhalb 10 °C, vorzugsweise unterhalb -10 °C, liegt.

Besonders bevorzugte Polymerisate C.) sind z.B. ABS-Polymerisate, wie sie in der DE-OS 2 035 390 oder in der DE-OS 2 248 242 beschrieben sind.

Geeignete Acrylatkautschuke C.2) sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, $\alpha$-Methylstyrol, kernalkyliertes Styrol, Methylmethacrylat, Acrylamide und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi(meth)-acrylate, Polyester-di(meth)-acrylate, Divinylbenzol, Trivinylbenzol, Triallylcyanurat, Allyl(meth)-acrylat, Butadien oder Isopren.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen. Besonders bevorzugte vernetzende Monomere sind hier Triallylcyanurat, Triallylisocyanurat, Trivinylcyanurat, Triacryloylhexahydro-s-triazin, Triallylbenzole. Die Menge der vernetzenden Monomere beträgt vorzugsweise 0,02 bis 5,0 Gew.-%, insbesondere 0,05 bis 2,0 Gew.-%, bezogen auf die Pfropfgrundlage C.2). Bei cyclischen vernetzenden Monomeren mit mindestens 3 ethylenisch ungesättigten Gruppen ist es vorteilhaft, die Menge auf unter 1 Gew.-% der Pfropfgrundlage C.2) zu beschränken.

Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungestättigten Monomerem, wie Styrol und/oder Acrylnitril, als Kern enthalten.

Bevorzugte Kautschuke zur Herstellung der Pfropfpolymerisate C) sind reine Dienund Acrylatkautschuke.

Weitere geeignete Pfropfgrundlagen gemäß C.2) sind Silikonkautschuke mit pfropfaktiven Stellen wie sie in DE-OS 3 704 657, DE-OS 3 704 655 und DE-OS 3 631 539 beschrieben werden.

Die Kautschuke liegen in den Pfropfpolymerisaten C) in Form wenigstens partiell vernetzter Teilchen einer mittleren Teilchengröße von 0,1 bis 3 µm, insbesondere 0,2 bis 0,6 µm vor. Sie sind wenigstens teilvernetzt, das heißt, sie besitzen Gelgehalte von größer 20 Gew.-%, besonders größer 50 Gew.-%, besonders bevorzugt im Bereich von

73 bis 98 Gew.-% (gemessen in Toluol).

**Komponente D)**

Die als Flammschutzmittel wirkende Komponente D) besteht aus einem Silikonharz D.1) und einem thermoplastischen Polyphenylenether in den bezogen auf die Zusammensetzung A) - C) wirksamen Mengen. Die Zusammensetzung von D) beträgt 5 bis 50 Gew.-%, vorzugsweise 5 bis 25 Gew.-% D.1) und 50 bis 95 Gew.-%, vorzugsweise 75 bis 95 Gew.-% D.2).

Die Silikonharze D.1) der vorliegenden Erfindung sind fest, pulverförmig und Hydroxylgruppen-haltig. Sie weisen die Summenformel (IV) auf,

$$R_xSi(OR^3)_yO_{\frac{4-x-y}{2}} \qquad (IV)$$

worin

R für einen einwertigen Kohlenwasserstoffrest steht, der gegebenenfalls selbst substituiert sein kann, insbesondere eine Methyl- oder Phenylgruppe bedeutet,

$R^3$ eine Alkylgruppe, vorzugsweise Methyl, oder ein Wasserstoffrest ist,

x einen Wert von 0,75 bis 1,75,

y einen Wert von 0,0001 bis 0,5 besitzen und

worin das Silikonharz aufgebaut ist aus Einheiten der Formel $SiO_{4/2}$, $RSiO_{3/2}$, $R_2SiO_{2/2}$ und/oder $R_3SiO_{1/2}$.

Die Herstellung der Silikonharze der Formel (IV) ist bekannt. Zu ihrer Weiterverarbeitung bzw. Verwendung liegen sie in Form von Lösungen in geeigneten Lösungsmitteln, auch in Lösung von Polydimethylsiloxanen, in Form von lösungsmittelhaltigen, wäßrigen Emulsionen oder als reiner Stoff vor. Eine weitere vorteilhafte Anwendungsform ist die Cofällung von Dispersionen aus Polymerisaten und Pfropfpolymerisaten mit Emulsionen von lösungsmittelhaltigen Silikonharzen. Sie gewährleistet feinste Verteilung in der Kunststoff-Formmasse.

Polyphenylenether der Komponente D.2) weisen die Formel (V) auf,

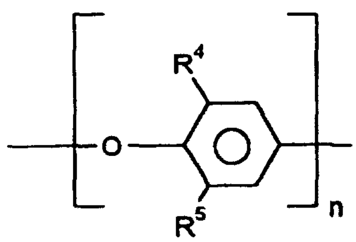

(V)

worin das Ethersauerstoffatom einer Einheit jeweils mit dem aromatischen Kern der benachbarten Einheit verbunden ist, n eine positive ganze Zahl > 20 ist und $R^4$ und $R^5$ unabhängig voneinander für Wasserstoff, Kohlenwasserstoffreste ohne tertiäres $\alpha$-Kohlenstoffatom und Kohlenwasserstoffoxyreste steht, beispielsweise Methyl, Ethyl, Propyl, Methoxy, Ethoxy, Propoxy.

Polyphenylenether, die der obigen Formel entsprechen sowie ihre Herstellung durch katalysierte oxidative Kupplung aus Phenolen und Sauerstoff-haltigen Gasen in Gegenwart von Metallaminkomplex-Katalysatoren werden in US-P 3 306 874, 3 306 875, 3 257 357 und 3 257 358 sowie DE-OS 3 035 599 und in Houben-Weyl, Methoden der Organischen Chemie, Bd. E20 (1987), S. 1320-1388, beschrieben.

Geeignete Polyphenylenether sind beispielsweise Poly-(2,6-dimethyl-1,4-phenylen)-ether, Poly-(2,6-diethyl-1,4-phenylen)-ether, Poly-(2-methyl-6-ethyl-1,4-phenylen)-ether, Poly-(2-methyl-6-propyl-1,4-phenylen)-ether, Poly-(2,6-diisopropyl-1,4-phenylen)-ether, Poly-(2-ethyl-6-propyl-1,4-phenylen)-ether oder Copolymere wie solche, die 2,3,6-Trimethylphenol enthalten, außerdem Mischungen verschiedener Polyphenylenether. Bevorzugt ist Poly-(2,6-dimethyl-1,4-phenylen)-ether oder Copolymere aus 2,6-Dimethylphenol und 2,3,6-Trimethylphenol. Die Polyphenylenther weisen im allgemeinen eine Grenzviskosität von 0,3 bis 0,7 dl/g aus, gemessen in einer Chloroform-Lösung bei

25°C.

Komponente E.1)

Die erfindungsgemäßen Polymermischungen enthalten als Flammschutzmittel Phosphorverbindungen der Formel (I),

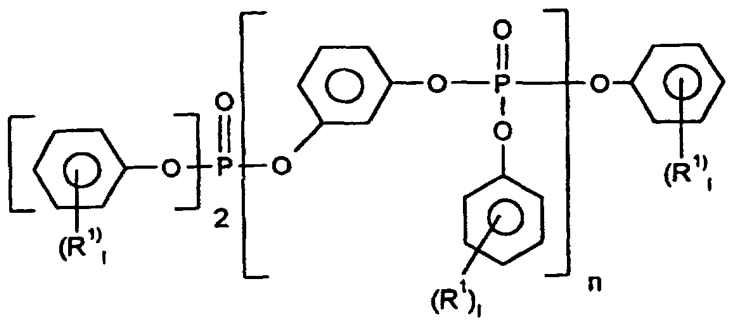

(I)

worin n, $R^1$ und l die oben genannte Bedeutung haben.

Als erfindungsgemäße Komponente E.1) können auch Mischungen verschiedener Phosphate eingesetzt werden. In diesem Fall hat n einen Durchschnittswert zwischen 1 und 5, vorzugsweise 1 und 2.

Als Phosphorverbindung der Formel (I) wird vorzugsweise m-Phenylen-bis-(diphenylphosphat) mit n gleich 1 und 2 bzw. zwischen 1 und 2 eingesetzt.

Komponente E.2)

Als Flammschutzmittel können die erfindungsgemäßen Mischungen weiterhin eine Mischung aus Phosphorverbindung(en) der Formel (I) und Phosphorverbindung(en) der Formel (II),

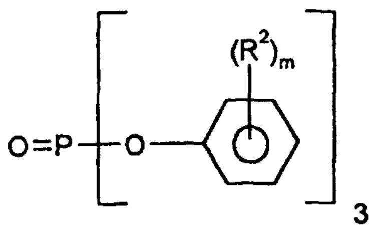

(II)

worin

$R^2$ und m die oben genannte Bedeutung haben,

enthalten.

Als Phosphorverbindung der Formel (II) wird vorzugsweise Triphenylphosphat eingesetzt.

Die Mischung enthält vorzugsweise 2 bis 30 Gew.-% Phosphorverbindung der Formel (II), bezogen auf 100 Gew.-% E.1 und E.2.

Die Phosphate sind generell nach bekannten Verfahren herstellbar (siehe beispielsweise Ullmann, Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177).

Die erfindungsgemäßen Formmassen können außerdem noch eines oder mehrere der folgenden Flammschutzmittel enthalten:

- Salze mit flammhemmenden Eigenschaften für Polycarbonat
- Metallverbindungen, die als Synergisten wirksamen sind.

Bevorzugtes Salz ist das Kaliumsalz der Diphenylsulfonsulfonsäure.

Die erfindungsgemäßen Formmassen können ferner übliche Additive wie Gleitund Entformungsmittel, Fließmittel, Nukleiermittel, Antistatika, Stabilisatoren, Füll- und Verstärkungsmittel sowie Farbstoffe und Pigmente enthalten. Bevorzugte Verstärkungsstoffe sind Glasfasern, bevorzugte Füllstoffe Glaskugeln, Glimmer, Quarz, Talkum, Wollastonit, bevorzugte Pigmente Ruß und Titandioxid.

Die erfindungsgemäßen thermoplastischen Formmassen, enthaltend die Komponenten A) bis E), werden hergestellt, indem man die jeweiligen Bestandteile in bekannter Weise vermischt und bei Temperaturen von 200 - 300 °C in üblichen Aggregation wie Innenknetern, Extrudern oder Doppelwellenschnecken schmelzcompoundiert.

Die Vermischung der einzelnen Bestandteile kann in bekannter Weise sowohl sukzessiv als auch simultan erfolgen, und zwar bei höherer Temperatur.

Gegenstand der vorliegenden Erfindung ist somit auch ein Verfahren zur Herstellung von thermoplastischen Polycarbonatformmassen bestehend aus den Komponenten A) bis E), das dadurch gekennzeichnet ist, daß man die jeweiligen der vorstehend genannten Bestandteile in bekannter Weise vermischt und danach bei Temperaturen von 200 °C bis 300 °C in üblichen Aggregaten schmelzcompoundiert oder schmelzextrudiert.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art (z.B. für Haushaltsgeräte und Büromaschinen) oder Abdeckplatten für den Bausektor, Teile für den Kfz-Sektor. Sie werden außerdem auf dem Gebiet der Elektrotechnik eingesetzt, weil sie sehr gute elektrische Eigenschaften besitzen.

Besonders geeignet sind die Formmassen zur Herstellung von dünnwandigen Formteilen (z.B. Datentechnik-Gehäuseteile), an die besondere hohe Ansprüche an Kerbschlagzähigkeit, Spannungsrißverhalten und Formbeständigkeit der eingesetzten Kunststoffe gestellt werden.

Teilchengröße bedeutet immer mittlerer Teilchendurchmesser $d_{50}$, ermittelt durch Ultrazentrifugenmessungen nach W. Scholtan et al., Kolloid-Z. und Z. Polymere 250 (1972) 782 - 796.

## Beispiele

Verwendete Materialien

Komponente A)

Polycarbonat auf Basis Bisphenol-A mit einer relativen Lösungsviskosität von 1,34, gemessen in Methylenchlorid bei 25 °C und einer Konzentration von 0,5 g/100 ml.

Komponente B)

Styrol/Acrylnitril-Copolymerisat mit einem Styrol/Acrylnitril-Verhältnis von 72:28 und einer Grenzviskosität von 55 dl/g (Messung in Dimethylformamid bei 20 °C).

Komponente C)

Pfropfpolymerisat von 45 Gew.-% Styrol/Acrylnitril-Gemisch im Verhältnis 72:28 auf 55 Gew.-% teilchenförmigem vernetztem Polybutadienkautschuk (mittlerer Teilchendurchmesser $d_{50}$ gleich 0,4 µm), hergestellt durch Emulsionspolymerisation.

Komponente D.1)

Baysilone-Harz M 120 XB, Lösungsmittel im Rotationsverdampfer entfernt, 100 %ig (Methylsilikonharz der Bayer AG).

Komponente D.1)

SFR100 (Methylsilikonharz in Polydimethylsiloxan der General Electric Silicones).

Komponente D.2)

Polyphenylenoxid, hergestellt aus 2,6 Dimethylphenol nach DE-OS 3 035 599, mit einer Grenzviskosität von 0,42 dl/g, gemessen in Chloroform bei 25°C.

Komponente E.1)

Fyroflex RDP der Firma AKZO B.V. (Oligomerengemisch mit ca. 60 - 65 % Anteil m-Phenylen-bis-(diphenylphosphat).

Komponente E.2)

Mischung aus 75,0 Gew.-% Fyroflex RDP (s. Komponente E.1) und 25,0 Gew.-% Triphenylphosphat (Disflamoll TP der Firma Bayer AG).

Herstellung und Prüfung der Formmassen

Die Herstellung der flammwidrigen thermoplastischen Formmassen erfolgte durch Kneten in einem Kleinkneter vom Typ W 50 E der Firma Brabender OHG Duisburg im Temperaturbereich von 210 bis 230 °C, einer Drehzahl von 60 $Min^{-1}$ und einer Knetdauer von 10 Min. Die so hergestellte Formmasse wurde auf einer elektrisch beheizten Laborpresse vom Typ Polystat 200 T der Firma Schwabenthan zu Platten von 4,0 bzw. 1,6 mm gepreßt, die Preßtemperatur betrug 200 °C, der Preßdruck 200 bar und die Dauer 5 Minuten.

Aus den Platten wurden die benötigten Prüfstäbe gesägt, diese den folgenden Tests unterzogen:

- Wärmeformbeständigkeit nach DIN 53 460 (Vicat B) an Stäben der Abmessung 80 x 10 x 4 mm,
- Brandtest nach Vorschrift Underwriter Laboratories (UL) 94 an Stäben der Dicke 1,6 mm.

Das Spannungsrißverhalten wurde an Stäben der Abmessung 80x10x4 mm, Preßtemperatur 220°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über den Bruch in Abhängigkeit von der Vordehnung im Testmedium bei einer Expositionszeit von 5 Minuten beurteilt.

**Tabelle:** Zusammensetzung und Eigenschaften der Formmassen

| Beispiele | Komponenten [Gew.-Teile] | | | | | | | ESC Bruch bei εx [%] | Vicat B 120 [°C] | UL 94V 1,6 mm |
|---|---|---|---|---|---|---|---|---|---|---|
| | A | B | C | D1 | D2 | E1 | E2 | | | |
| 1 | 69 | 4 | 10 | 1 | 1 | - | 15 | 1,6 | 89 | V-0 |
| 2 | 69 | 5 | 10 | 1 | 1 | - | 14 | 1,8 | 91 | V-0 |
| 3 | 69 | 6 | 10 | 1 | 1 | - | 13 | 2,0 | 93 | V-0 |
| 4 | 69 | 4 | 10 | 1 | 1 | 15 | - | 1,4 | 91 | V-0 |
| 5 | 69 | 5 | 10 | 1 | 1 | 14 | - | 1,6 | 93 | V-0 |
| 6 | 69 | 6 | 10 | 1 | 1 | 13 | - | 1,8 | 95 | V-0 |

Die erfindungsgemäßen Formmasen (Beispiele 1 bis 6) weisen eine sehr günstige Eigenschaftskombination aus Flammwidrigkeit, Wärmeformbeständigkeit und Spannungsrißverhalten auf. In den Beispielen 1 bis 3 bzw. 4 bis 6 erlauben selbst geringe Anteile Polyphenylenoxid und Silikonharz eine deutliche Reduktion der Phosphat-Menge, ohne daß die Bewertung V-0 verloren geht. Als Folge dieses synergistischen Effektis verbessern sich Wärmeformbeständigkeit und ESC-Verhalten.

Die oben genannte günstige Eigenschaftskombination der erfindungsgemäßen Formmassen ergibt sich auch dann, wenn statt des Resorcindiphosphates ein Gemisch aus Komponente E.1 und einem Monophosphat wie beispielsweise Triphenylphosphat eingesetzt wird. Als zusätzlicher Vorteil kommt bei diesen Formmassen eine verbesserte Spannungrißbeständigkeit hinzu (siehe Vergleich der Beispiele 1 bis 3 mit 4 bis 6). Eine ausschließliche Verwendung der Monophosphate als Phosphatkomponente E führt zu starken Defiziten in der Wärmeformbeständigkeit.

**Patentansprüche**

**1.** Thermoplastische Formmassen, bestehend aus

A) 50 bis 95 Gew.-% thermoplastischem aromatischem Polycarbonat,

B) 0 bis 20 Gew.-% Copolymerisat bzw. Polykondensat aus

B.1) thermoplastischem Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus, und

B.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-% Pfropfpolymerisat hergestellt aus

C.1) 5 bis 90 Gew.-% einer Mischung aus

C.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus, und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-% einem Kautschuk mit einer Glastemperatur TG ≤ 10 °C,

D) 1 bis 20 Gew.-% einer als Flammschutzmittel wirkenden Kombination aus

D.1) 5 bis 50 Gew.-% Silikonharz und

D.2) 50 bis 95 Gew.-% thermoplastischen Polyphenylenether,

E) 3 bis 18 Gew.-% Phosphorsäureester aus

E.1) Phosphorverbindungen der Formel (I)

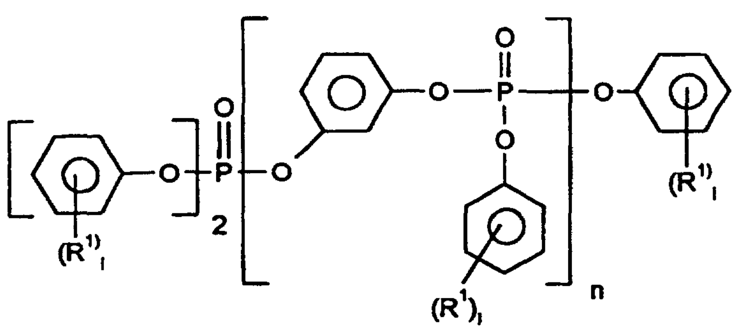

(I)

worin

n die Zahlen 1 bis 5,

$R^1$ Methyl und

l die Zahlen 0 bis 5 sind,

oder

E.2) einer Mischung aus Phosphorverbindungen der Formel (I) und Phosphorverbindungen der Formel (II),

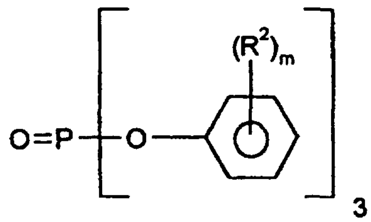

(II)

worin

$R^2$ Methyl und
m die Zahlen 0 bis 5 sind,

wobei die Menge an Phosphorverbindung gemäß Formel (II) in der Phosphatmischung aus E.1) und E. 2) maximal 35 Gew.-% beträgt.

**2.** Thermoplastische Formmassen gemäß Anspruch 1, wobei die Komponenten

A) in einer Menge von 60 bis 90 Gew.-%,

B) in einer Menge von 1 bis 15 Gew.-%,

C) in einer Menge von 5 bis 15 Gew.-%,

D) in einer Menge von 2 bis 15 Gew.-% und

E) in einer Menge von 5 bis 15 Gew.-%

enthalten sind.

**3.** Thermoplastische Formmassen gemäß Anspruch 1, wobei als Komponente D.1) Silikonharze der Formel (IV)

$$R_xSi(OR^3)_yO_{\frac{4-x-y}{2}} \quad \text{(IV)}$$

worin

R für einen einwertigen Kohlenwasserstoffrest steht, der gegebenenfalls selbst substituiert sein kann, insbesondere aber eine Methyl- oder Phenylgruppe bedeutet,

$R^3$ eine Alkylgruppe oder ein Wasserstoffrest ist,

x einen Wert von 0,75 bis 1,75,

y einen Wert von 0,0001 bis 0,5 besitzen und

worin das Silikonharz aufgebaut ist aus Einheiten der Formel $SiO_{4/2}$, $RSiO_{3/2}$, $R_2SiO_{2/2}$ und/oder $R_3SiO_{1/2}$ und D.2) Polyphenylenether der Formel (V)

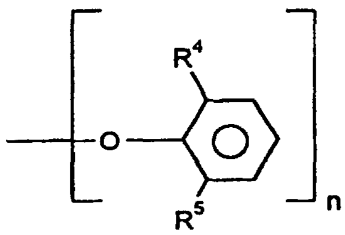

(V)

worin das Ethersauerstoffatom einer Einheit jeweils mit dem aromatischen Kern der benachbarten Einheit verbunden ist, n eine positive ganze Zahl > 20 ist und $R^4$ und $R^5$ unabhängig voneinander für Wasserstoff, Kohlenwasserstoffreste ohne tertiäres $\alpha$-Kohlenstoffatom und Kohlenwasserstoffoxyreste steht eingesetzt werden.

**4.** Thermoplastische Formmassen gemäß Anspruch 1, **dadurch gekennzeichnet, daß** als Komponente E) Mischungen aus m-Phenylen-bis-(diphenylphosphat) und Triphenylphosphat eingesetzt werden.

**5.** Thermoplastische Formmassen gemäß Anspruch 1, die als zusätzliche Flammschutzmittel Salze mit flammwidrigen Eigenschaften für Polycarbonat und/oder als Synergisten wirksame Metallverbindungen enthalten.

**6.** Thermoplastische Formmassen gemäß Anspruch 1, die zusätzlich Zusatzstoffe wie Gleit- und Entformungsmittel, Fließmittel, Nukleiermittel, Stabilisatoren, Antistatika, Füll- und Verstärkungsmittel, Farbstoffe und/oder Pigmente enthalten.

**7.** Verfahren zur Herstellung der Polycarbonatformmassen gemäß Anspruch 1, wobei man die Komponenten A) bis E) in bekannter Weise vermischt und bei Temperaturen von 200 °C bis 300 °C in üblichen Aggregation schmelzcompoundiert oder schmelzextrudiert.

**8.** Verwendung der thermoplastischen Formmassen gemäß Anspruch 1 zur Herstellung von Formkörpern.

**9.** Formkörper, hergestellt aus thermoplastischen Formmassen gemäß Anspruch 1.

## Claims

**1.** Thermoplastic moulding compositions consisting of

A) 50 to 95 wt.% of thermoplastic aromatic polycarbonate,

B) 0 to 20 wt.% of copolymer or polycondensation product consisting of

B.1) thermoplastic copolymer prepared from

B.1.1) 50 to 95 wt.% of styrene, $\alpha$-methylstyrene, ring-alkylated styrene, $C_1$-$C_8$ alkyl acrylate, $C_1$-$C_8$ alkyl methacrylate or mixtures thereof and

B.1.2) 5 to 50 wt.% of acrylonitrile, methacrylonitrile, $C_1$-$C_8$ alkyl acrylate, $C_1$-$C_8$ alkyl methacrylate, maleic anhydride, N-substituted maleimide, vinyl acetate or mixtures thereof and/or

B.2) thermoplastic polyalkylene terephthalate,

C) 3 to 18 wt.% of graft polymer produced from

C.1) 5 to 90 wt.% of a mixture prepared from

C.1.1) 50 to 95 wt.% of styrene, α-methylstyrene, ring-alkylated styrene, $C_1$-$C_8$ alkyl acrylate, $C_1$-$C_8$ alkyl methacrylate or mixtures thereof and

C.1.2) 5 to 50 wt.% of acrylonitrile, methacrylonitrile, $C_1$-$C_8$ alkyl acrylate, $C_1$-$C_8$ alkyl methacrylate, maleic anhydride, N-substituted maleimide or mixtures thereof on

C.2) 10 to 95 wt.% of rubber with a glass transition temperature $T_g$ of ≤ 10°C,

D) 1 to 20 wt.% of a combination with flame retardant action prepared from

D.1) 5 to 50 wt.% of silicone resin and

D.2) 50 to 95 wt.% of thermoplastic polyphenylene ether,

E) 3 to 18 wt.% of phosphoric acid ester prepared from

E.1) phosphorus compounds of the formula (I),

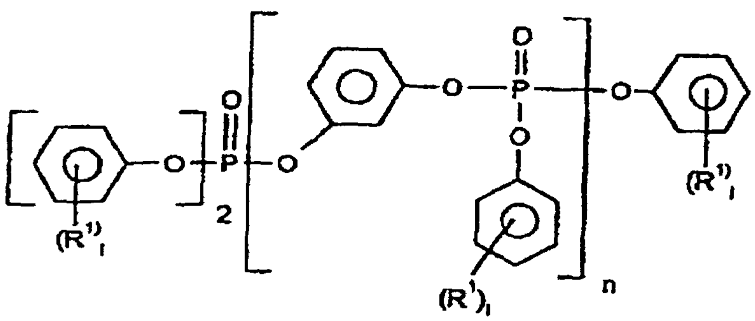

(I)

in which

n is a number from 1 to 5,

$R^1$ is methyl and

l is a number from 0 to 5,

or

E.2) a mixture of phosphorus compounds of the formula (I) and phosphorus compounds of the formula (II),

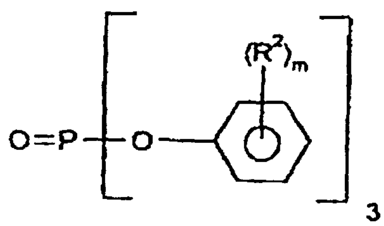

(II)

in which

$R^2$ is methyl and

m is the number 0 to 5,

wherein the quantity of phosphorus compounds of the formula (II) in the phosphate mixture prepared from E. 1) and E.2) is at most 35 wt.%.

**2.** Thermoplastic moulding compositions according to claim 1, wherein they contain the components

A) in a quantity of 60 to 90 wt.%,

B) in a quantity of 1 to 15 wt.%,

C) in a quantity of 5 to 15 wt.%,

D) in a quantity of 2 to 15 wt.% and

E) in a quantity of 5 to 15 wt.%.

**3.** Thermoplastic moulding compositions according to claim 1, wherein silicone resins of the formula (IV) are used as component D.1)

$$R_xSi(OR^3)_yO_{\frac{4-x-y}{2}} \quad (IV)$$

in which

R denotes a monovalent hydrocarbon residue, which may optionally itself be substituted, but in particular a methyl or phenyl group,

$R^3$ is an alkyl group or a hydrogen residue,

x has a value of 0.75 to 1.75,

y has a value of 0.0001 to 0.5 and

in which the silicone resin is synthesised from units of the formula $SiO_{4/2}$, $RSiO_{3/2}$, $R_2SiO_{2/2}$ and/or $R_3SiO_{1/2}$ and polyphenylene ethers of the formula (V) as D.2)

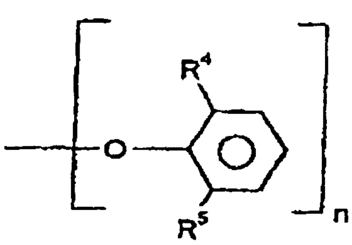

(V)

in which the ether oxygen atom of one unit is in each case attached to the aromatic ring of the adjacent unit, n is a positive integer of > 20 and $R^4$ and $R^5$ mutually independently denote hydrogen, hydrocarbon residues without a tertiary $\alpha$-carbon atom and oxyhydrocarbon residues.

**4.** Thermoplastic moulding compositions according to claim 1, **characterised in that** mixtures of m-phenylene-bis-(diphenyl phosphate) and triphenyl phosphate are used as component E).

**5.** Thermoplastic moulding compositions according to claim 1, which contain salts with flame inhibiting properties for

polycarbonate and/or metal compounds with a synergistic action as additional flame retardants.

**6.** Thermoplastic moulding compositions according to claim 1, additionally containing additives such as lubricants and mould release agents, plasticisers, nucleating agents, stabilisers, antistatic agents, fillers and reinforcing materials, dyes and/or pigments.

**7.** Process for the production of thermoplastic polycarbonate moulding compositions according to claim 1, wherein components A) to E) are mixed in a known manner and then melt-compounded or melt-extruded at temperatures of 200°C to 300°C in customary equipment.

**8.** Use of the thermoplastic moulding compositions according to claim 1 for the production of mouldings.

**9.** Mouldings produced from thermoplastic moulding compositions according to claim 1.

**Revendications**

**1.** Masses à mouler thermoplastiques consistant en

A) 50 à 95 % en masse de polycarbonate aromatique thermoplastique,
B) 0 à 20 % en masse de copolymère ou de polycondensat consistant en

B.1) copolymère thermoplastique de

B.1.1) 50 à 95 % en masse de styrène, d'α-méthylstyrène, de styrène alkylé sur le noyau, d'acrylate de $C_1$-$C_8$-alkyle, de méthacrylate de $C_1$-$C_8$-alkyle ou de mélanges de ceux-ci et
B1.2) 5 à 50 % en masse d'acrylonitrile, de méthacrylonitrile, d'acrylate de $C_1$-$C_8$-alkyle, de méthacrylate de $C_1$-$C_8$-alkyle, d'anhydride maléique, de maléimide N-substitué, d'acétate de vinyle ou de mélanges de ceux-ci et/ou

B.2) polyalkylènetéréphtalate thermoplastique,

C) 3 à 18 % en masse de polymère greffé, produit à partir de

C.1) 5 à 90 % en masse d'un mélange de

C.1.1) 50 à 95 % en masse de styrène, d'α-méthylstyrène, de styrène alkylé sur le noyau, d'acrylate de $C_1$-$C_8$-alkyle, de méthacrylate de $C_1$-$C_8$-alkyle ou de mélanges de ceux-ci et
C.1.2) 5 à 50 % en masse d'acrylonitrile, de méthacrylonitrile, d'acrylate de $C_1$-$C_8$-alkyle, de méthacrylate de $C_1$-$C_8$-alkyle, d'anhydride maléique, de maléimide N-substitué ou de mélanges de ceux-ci, sur

C.2) 10 à 95 % en masse d'un caoutchouc ayant une température de transition vitreuse $T_g \leq 10°C$,

D) 1 à 20 % en masse d'une combinaison jouant le rôle d'agent ignifugeant de

D.1) 5 à 50 % en masse de résine de silicone et
D.2) 50 à 95 % en masse de polyphénylène-éther thermoplastique,

E) 3 à 18 % en masse d'esters d'acide phosphorique constitués par

E.1) des composés du phosphore de formule (I)

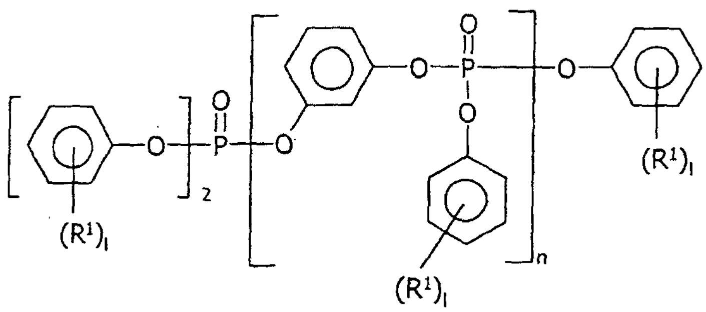

(I)

où

n est les nombres 1 à 5,
$R^1$ est méthyle et
l est les nombres 0 à 5,

où
E.2) un mélange de composés du phosphore de formule (I) et de composés du phosphore de formule (II)

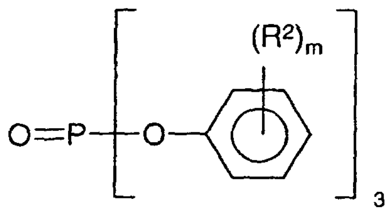

(II)

où

$R^2$ est méthyle et
m est les nombres 0 à 5,

où la quantité de composé du phosphore selon la formule (II) dans le mélange de phosphates constitué par E.1) et E.2) est au maximum de 35 % en masse.

**2.** Masses à mouler thermoplastiques selon la revendication 1 où les composants sont contenus

A) en une quantité de 60 à 90 % en masse,
B) en une quantité de 1 à 15 % en masse,
C) en une quantité de 5 à 15 % en masse,
D) en une quantité de 2 à 15 % en masse et,
E) en une quantité de 5 à 15 % en masse.

**3.** Masses à mouler thermoplastiques selon la revendication 1 où on utilise comme composant D.1) des résines de silicone de formule (IV)

$$R_xSi(OR^3)_yO_{\frac{4-x-y}{2}} \quad (IV)$$

où

R représente un groupement hydrocarboné monovalent, qui peut lui-même éventuellement être substitué, mais en particulier un groupe méthyle ou phényle,
$R^3$ est un groupe alkyle ou un groupement hydrogène,

x possède une valeur de 0,75 à 1,75,
y possède une valeur de 0,0001 à 0,5 et

où la résine de silicone est constituée à partir d'unités de formule $SiO_{4/2}$, $RSiO_{3/2}$, $R_2SiO_{2/2}$ et/ou $R_3SiO_{1/2}$ et D.2) des polyphénylène-éthers de formule (V)

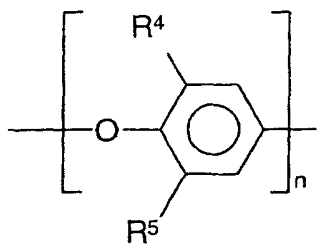
(V)

où l'atome d'oxygène d'éther d'une unité est lié dans chaque cas au noyau aromatique de l'unité voisine, n est un nombre entier positif > 20 et $R^4$ et $R^5$ représentent indépendamment l'un de l'autre l'hydrogène, des groupements hydrocarbonés sans atome de carbone $\alpha$ tertiaire et des groupements hydrocarboneoxy.

**4.** Masses à mouler thermoplastiques selon la revendication 1 **caractérisées en ce que** des mélanges de bis-(diphénylphosphate) de m-phénylène et de triphénylphosphate sont utilisés comme composant E).

**5.** Masses à mouler thermoplastiques selon la revendication 1 qui contiennent des sels à propriétés d'ininflammabilité pour le polycarbonate comme agents ignifugeants supplémentaires et/ou des composés métalliques efficaces comme agents de synergie.

**6.** Masses à mouler thermoplastiques selon la revendication 1 qui contiennent en outre des additifs tels que des agents lubrifiants et de démoulage, des agents d'écoulement, des agents de nucléation, des stabilisants, des antistatiques, des agents de charge et de renfort, des colorants et/ou des pigments.

**7.** Procédé de préparation des masses à mouler en polycarbonate selon la revendication 1 où on mélange de manière connue les composants A) à E) et on les combine à l'état fondu ou on les extrude à l'état fondu dans des appareils courants à des températures de 200°C à 300°C.

**8.** Utilisation des masses à mouler thermoplastiques selon la revendication 1 pour la production de corps moulés.

**9.** Corps moulés produits à partir de masses à mouler thermoplastiques selon la revendication 1.